# EUROPÄISCHE PATENTSCHRIFT

(11) **EP 4 268 315 B1**
(45) Veröffentlichungstag und Bekanntmachung des Hinweises auf die Patenterteilung: **24.07.2024**
(21) Anmeldenummer: 22790471.1
(22) Anmeldetag: 16.09.2022
(51) Int. Cl.: H01M 50/284, H01M 50/293

(54) **TRENNWANDBAUGRUPPE FÜR EIN BATTERIEGEHÄUSE, BATTERIE UND FAHRZEUG**
PARTITION WALL ASSEMBLY FOR A BATTERY HOUSING, BATTERY, AND VEHICLE
ENSEMBLE PAROI DE SÉPARATION POUR COMPARTIMENT DE BATTERIE, BATTERIE ET VÉHICULE

(30) Priorität: 12.10.2021 DE 102021005097
(43) Veröffentlichungstag der Anmeldung: 01.11.2023
(73) Patentinhaber: Mercedes-Benz Group AG, 70372 Stuttgart (DE)
(72) Erfinder: SCHOELLKOPF, Bernd, 73066 Uhingen (DE); FACKLER, Tobias, 73262 Reichenbach (DE)
(74) Vertreter: Novagraaf Group
(86) Internationale Anmeldenummer: PCT/EP2022/075792
(87) Internationale Veröffentlichungsnummer: WO 2023/061697

(56) Entgegenhaltungen:
- US-A- 5 496 657
- US-A1- 2019 288 343
- US-A1- 2020 290 933
- US-B2- 10 529 966

## Beschreibung

Die Erfindung betrifft eine Trennwandbaugruppe für ein Batteriegehäuse nach der im Oberbegriff von Anspruch 1 näher definierten Art, eine Batterie mit einem Batteriegehäuse nach der im Oberbegriff von Anspruch 6 näher definierten Art sowie ein Fahrzeug mit einer solchen Batterie.

Traktionsbatterien für Fahrzeuge, im Folgenden Batterie genannt, umfassen typischerweise ein mehrteiliges Gehäuse, welches einen Batterieinnenraum umschließt, sowie im Batterieinnenraum angeordnete Zellmodule, die wiederum jeweils eine Vielzahl von galvanischen Zellen umfassen. Die einzelnen galvanischen Zellen sowie die Zellmodule werden auf eine bestimmte Art und Weise in reihe und/oder parallel verschaltet, um die Kapazität der Batterie und die von der Batterie abgebare Spannung einzustellen.

Im Falle einer Beschädigung einer galvanischen Zelle kann diese in Brand geraten, wodurch benachbarte galvanische Zellen oder sogar das gesamte Zellmodul angesteckt werden kann. Die Flammen können sich auch auf angrenzende Zellmodule ausbreiten, was eine Zerstörung der gesamten Batterie zur Folge haben kann. Dieser Vorgang wird auch als thermisches Durchgehen oder Thermal Propagation bezeichnet. Um diesen Vorgang zu verlangsamen, werden sogenannte Trennwände zwischen einzelne Zellmodule im Batterieinnenraum angeordnet. Mit Hilfe einer solchen Trennwand lassen sich einzelne Zellmodule zueinander thermisch und elektrisch isolieren. Hierdurch lässt sich das Risiko einer Ausbreitung von Flammen im Batterieinnenraum und das in Brand setzen von Zellmodulen aufgrund einer unzulässigen Aufheizung durch das umspülen von heißen Brandgasen senken.

Zur Verschaltung von Zellmodulen werden die Ableiter von Zellmodulen mittels Kontaktelementen, auch als Stromschiene bezeichnet, verbunden. Um eine solche Stromschiene durch eine Trennwand hindurchzuführen, weisen Trennwände typischerweise Öffnungen auf. Diese Öffnungen erlauben jedoch auch den Durchtritt von Gasen und/oder Flammen und begünstigen somit die Inbrandsetzung zueinander benachbarter Zellmodule. Zur Vermeidung von Kurzschlüssen oder elektrischen Schlägen wird eine Stromschiene in einem Stromschienengehäuse angeordnet, was das unmittelbare Berühren der Stromschiene verhindert.

Batterien umfassen ferner eine Vielzahl unterschiedlicher Bauteile, wie Gehäuseteile, Schrauben, Zellmodule, Stromleiter, Kühlkomponenten, Leistungselektronik und dergleichen. Der Fertigungsaufwand zur Herstellung einer Batterie ist somit entsprechend hoch.

Aus der EP 3 282 501 A1 sind eine Batterie, ein Batteriemodul für die Batterie und eine Stromschiene für die Batterie bekannt. Dabei weist die Stromschiene eine integrierte Schutzfunktion auf. Über die Stromschiene lassen sich mehrere galvanische Zellen parallel verschalten, wobei jeweils die einzelnen galvanischen Zellen über eine Schmelzsicherung an die Stromschiene angeschlossen werden. Die Schmelzsicherung wird von einem Metallblech ausgebildet, in welches, beispielsweise durch Stanzen, zwei Schenkelabschnitte eingebracht werden. Die beiden Schenkelabschnitte bilden somit ein Federelement aus und ermöglichen eine Relativbewegung der galvanischen Zellen gegenüber der Stromschiene, wodurch das Abreißen einzelner galvanischer Zellen von der Stromschiene erschwert wird. Im Schadensfall einzelner galvanischer Zellen kann der von einer galvanischen Zelle abgegebene Strom rapide ansteigen, wodurch die anderen an der Stromschiene angeschlossenen galvanischen Zellen beschädigt werden können. In diesem Falle erhitzt sich die Schmelzsicherung jedoch so stark, dass sie schmilzt und die defekte galvanische Zelle von der Stromschiene trennt.

Aus der US 5,496,657 A ist ein modulares Batteriesystem mit individuell verschalteten Zellmodulen bekannt. Zwischen einzelnen Zellmodulen ist jeweils eine Trennwand mit in die Trennwand eingelassenen Zellverbindern angeordnet. An die Trennwand sind Führungsmittel angeschlossen, welche ein einfaches zueinander Ausrichten und Anordnen der Zellmodule erlauben.

Aus der US 2011/0302773 A1 ist ein System zur Montage elektrischer Energiemodule bekannt. Mehrere Zellmodule sind durch je einen Verbindungsblock und in den Verbindungsblock eingelassene Kontaktelemente miteinander elektrisch leitend verbunden. Es ist eine Anordnung der Zellmodule seitlich nebeneinander oder vertikal gestapelt möglich. Der Verbindungsblock kann einen plattenartigen Fortsatz aufweisen, welcher sich zwischen zwei Zellmodule erstreckt und einen Kühlkanal zum Führen eines Kühlmediums aufweist, um Wärme aus den Zellmodulen abzuführen.

Aus der DE 10 2013 202 367 A1 ist ein Energiespeichermodul mit einem durch eine Verbundfolie gebildeten Modulgehäuse bekannt. Dabei umhüllt die Verbundfolie jeweils eine elektrische Speicherzelle zur Ausbildung einzelner Aufnahmetaschen. Mehrere Aufnahmetaschen sind durch eine stoffschlüssige Verbindung miteinander verbunden und bilden so das Energiespeichermodul aus. Durch die Verbundfolie sind jeweils an einer Kontaktfläche zwischen benachbarten Aufnahmetaschen Zellverbinder zum elektrischen Kontaktieren der Speicherzellen hindurchgeführt.

Aus der US 2019/0288343 A1 ist eine Vorrichtung für eine Batterie bekannt. Die Batterie umfasst ein Batteriegehäuse mit einer vom Batteriegehäuse selbst ausgebildeten Trennwand, zum Unterteilen eines Batterieinnenraums in mehrere Kammern. In einer jeweiligen Kammer ist jeweils ein Zellmodul angeordnet. Zellverbinder werden durch oder über die Trennwand geführt, um die benachbarten Zellmodule elektrisch zu kontaktieren.

Aus der DE 10 2017 216 005 A1 ist ein Batteriemodul und ein Batteriepack bekannt. Mehrere Batteriezellen werden in einer Reihe angeordnet und über elektrisch leitfähige Verbindungselemente miteinander kontaktiert. Zwischen den Batteriezellen sind Haltestrukturkörper angeordnet, welche ein einfaches und zuverlässiges zueinander Ausrichten und Montieren der Batteriezellen erlauben.

Ferner offenbart die EP 3 496 179 A1 einen Verbinder für ein Batteriepack. Das Batteriepack umfasst ein Batteriegehäuse mit zwei Kammern, wobei in jeder Kammer ein Batteriemodul mit einer Vielzahl an Batteriezellen angeordnet ist. Die Kammern sind durch eine integral durch das Batteriegehäuse ausgebildete Wand zueinander abgegrenzt. Die Wand weist eine Öffnung auf, durch die der Verbinder zum elektrischen Kontaktieren der Batteriemodule hindurchgeführt wird. Der Verbinder selbst umfasst einen elektrisch leitfähigen Kern und eine den Kern umgebende Hülle. Die Hülle ist nach Art eines Dübels ausgeführt, um den Verbinder fest in der Wand zu halten.

Der vorliegenden Erfindung liegt die Aufgabe zugrunde, eine verbesserte Trennwandbaugruppe für ein Batteriegehäuse anzugeben, mit dessen Hilfe der Fertigungsaufwand einer Batterie und eine in der Fertigung zum Verschalten von Zellmodulen erforderliche Taktzeit reduziert wird.

Erfindungsgemäß wird diese Aufgabe durch eine Trennwandbaugruppe für ein Batteriegehäuse mit den Merkmalen des Anspruchs 1 gelöst. Vorteilhafte Ausgestaltungen und Weiterbildungen sowie eine Batterie mit einer solchen Trennwandbaugruppe und ein Fahrzeug mit einer solchen Batterie ergeben sich aus den hiervon abhängigen Ansprüchen.

Eine Trennwandbaugruppe für ein Batteriegehäuse umfasst eine Trennwand, die in einer von einer Längsrichtung und einer orthogonal auf der Längsrichtung stehenden Höhenrichtung aufgespannten Wandebene liegt und welche dazu eingerichtet ist einen vom Batteriegehäuse umschlossenen Batterieinnenraum in zueinander abgegrenzte Kammern zu unterteilen, wenigstens ein Stromschienengehäuse und wenigstens eine im Stromschienengehäuse aufgenommene Stromschiene, welche orthogonal zur Wandebene durch die Trennwand hindurchgeführt ist. Dabei ist das Stromschienengehäuse einteilig mit der Trennwand ausgeführt. Erfindungsgemäß ist die Trennwand separat gegenüber dem Batteriegehäuse ausgeführt und dazu eingerichtet mit diesem verbunden zu werden. Ferner weist die Trennwand einen Sandwichaufbau in eine zur Wandebene orthogonale Richtung auf, wobei ein Sandwichkern ein mineralisches Material umfasst oder vollständig hieraus besteht.

Die erfindungsgemäße Trennwandbaugruppe erlaubt es aufgrund der einteiligen Ausführung von Trennwand und Stromschienengehäuse die Anzahl erforderlicher Komponenten zur Verschaltung von Zellmodulen zu reduzieren, was den Fertigungsaufwand von Batterien vereinfacht und Taktzeiten in der Fertigung verkürzt. So kann die Stromschiene in die Trennwand eingesetzt und die Trennwand mit Stromschiene im Batteriegehäuse verbaut werden. Es ist nicht mehr erforderlich zuerst die Stromschiene in ein Stromschienengehäuse zu integrieren, die Trennwand im Batteriegehäuse zu verbauen und dann das Stromschienengehäuse mit der Stromschiene durch die Trennwand hindurchzuführen. Die erfindungsgemäße Trennwandbaugruppe weist zudem den Nebeneffekt auf, dass das Anstecken zueinander benachbarter Zellmodule im Falle des thermischen Durchgehens eines Zellmoduls erschwert wird, was die Sicherheit von Batterien im Brandfall verbessert. Der Nebeneffekt lässt sich dadurch erzielen, dass Öffnungsspalte zwischen Stromschienengehäuse und Trennwand entfallen, durch die ansonsten Flammen und heiße Gase durchtreten können.

Es können generell auch mehrere Stromschienen von einer Trennwand aufgenommen sein. Beispielsweise können zwei Stromschienen mit einem Abstand in die Längsrichtung zueinander durch die Trennwand hindurchragen. Dabei können zwei oder mehr als zwei Zellmodule über eine Stromschiene kontaktiert sein.

Beispielsweise kann eine Matte aus dem mineralischen Material in einen Hohlraum der Trennwand eingelegt sein. Mit Hilfe des mineralischen Materials lässt sich der Wärmewiderstand der Trennwand orthogonal durch die Wandebene erhöhen, wodurch der von einem in Flammen stehenden Zellmodul an ein benachbartes Zellmodul übertragene Wärmestrom reduziert wird. Dies erhöht die Sicherheit einer Batterie im Brandfall weiter. Ferner ist auch das mineralische Material nichtleitfähig, was die Sicherheit der Batterie auch im Falle von Kurzschlüssen verbessert.

Eine vorteilhafte Weiterbildung der Trennwandbaugruppe sieht vor, dass die Stromschiene in der Wandebene zumindest mittelbar formschlüssig an der Trennwand anliegt, insbesondere fluiddicht anliegt. Je kleiner der Spalt zwischen Stromschiene und Trennwand ausfällt, desto schwieriger ist es für Flammen und Gase, von einem in Flammen stehenden Zellmodul auf ein benachbartes Zellmodul überzuschlagen. Insbesondere, wenn die Stromschiene fluiddicht an der Trennwand anliegt, können keine Gase zwischen Stromschiene und Trennwand hindurchtreten. Dabei kann die Stromschiene direkt an der Trennwand anliegen oder es befindet sich ein Ausgleichsmaterial zwischen Stromschiene und Trennwand. Beispielsweise kann die Stromschiene zumindest bereichsweise von einem temperaturbeständigen Schrumpfschlauch umgeben sein, der den Spalt zwischen Stromschiene und Trennwand fluiddicht ausfüllt.

Entsprechend einer weiteren vorteilhaften Ausgestaltung der Trennwandbaugruppe, umfasst diese eine Schutzkappenanordnung für jede Stromschiene, wobei die Schutzkappenanordnung zusammen mit der Trennwand eine jeweilige Stromschiene einschließt und die Schutzkappenanordnung ein in der Wandebene liegendes und in der Höhenrichtung auf der Schutzkappenanordnung angeordnetes Distanzstück aufweist, wobei das Distanzstück und eine in der Höhenrichtung liegende Stirnseite der Trennwand in die Höhenrichtung bündig aneinander anliegen. Durch das Vorsehen einer Schutzkappenanordnung erhöht sich zwar die Teileanzahl der Trennwandbaugruppe, diese ist jedoch immer noch geringer als bei bisher verwendeten Stromschienengehäusen, da auch diese typischerweise mit Schutzkappen versehen sind. Das Vorsehen einer Schutzkappenanordnung ermöglicht es gebogene Stromschienen in der Trennwand anzuordnen. Zum Einführen einer solchen beispielsweise U-förmig gebogenen Stromschiene kann die Trennwand eine in die Höhenrichtung geöffnete Aufnahme an der Stirnseite aufweisen. Mittels der U-Form lassen sich Lagetoleranzen sowie thermische Dehnung der Stromschiene ausgleichen. Mit Hilfe der Schutzkappenanordnung lässt sich diese Aufnahme verschließen, um das Hindurchtreten von Gasen durch die Trennwand auf ein Minimum zu reduzieren oder sogar ganz zu verhindern. Mit Hilfe des Distanzstücks lassen sich Spalte zwischen Trennwand und Batteriegehäuse überbrücken beziehungsweise schließen, was die Isolierwirkung der Trennwandbaugruppe verbessert. Die Schutzkappenanordnung kann beispielsweise einen Schutzkappenträger mit dem entsprechenden Distanzstück sowie zwei Schutzkappen aufweisen. Das Distanzstück kann einteilig mit dem Schutzkappenträger ausgeführt sein, an dieses angeformt sein oder auch auf eine sonstige Art und Weise, beispielsweise mittels Klebverbindung oder Schrauben, an diesem befestigt sein.

Eine weitere vorteilhafte Ausgestaltung der Trennwandbaugruppe sieht ferner vor, dass die Trennwand zumindest ein nicht leitendes Material umfasst, insbesondere Kunststoff und/oder ein Faser-Kunststoff-Verbund-Material und die Trennwand bevorzugt durch Spritzgießen hergestellt ist. Bei Kunststoff handelt es sich um ein vergleichsweise günstiges nichtleitendes Material. Insbesondere durch eine Ausführung als Faser-Kunststoff-Verbund lassen sich die mechanischen Eigenschaften der Trennwand verbessern. So lässt sich beispielsweise die Stabilität und Steifigkeit der Trennwand erhöhen. Die Verwendung von Kunststoff bzw. eines Faser-Kunststoff-Verbund-Materials erlaubt eine Fertigung mittels Spritzgießen, wodurch die Trennwand, auch in hoher Stückzahl, besonders günstig und zeiteffizient hergestellt werden kann. Beispielsweise umfasst die Trennwand PA6, GF35, ein Duroplast und/oder ein sogenanntes Sheet-Moulding-Compound (SMC).

Eine weitere vorteilhafte Ausgestaltung der Trennwandbaugruppe sieht ferner vor, dass auf einer in der Höhenrichtung liegenden Stirnseite der Trennwand, eine in die Längsrichtung insbesondere über die vollständige Länge der Trennwand durchgehende Toleranzausgleichsmatte angeordnet ist, wobei die Toleranzausgleichsmatte in die Höhenrichtung betrachtet über der Stromschiene verläuft. Mit Hilfe der Toleranzausgleichsmatte lassen sich Lagetoleranzen zwischen der im Batteriegehäuse angeordneten Trennwand und dem Batteriegehäuse ausgleichen und somit potentielle Spalte schließen. Dies erschwert das Überschlagen von Flammen und/oder das Ausbreiten von Gasen im Batterieinnenraum zusätzlich. Die Toleranzausgleichsmatte kann sich über die vollständige Länge der Trennwand erstrecken oder auch nur abschnittsweise auf der Stirnseite der Trennwand aufliegen. Auch ist es möglich, dass die Toleranzausgleichsmatte in mehrere Abschnitte unterteilt ist, beispielsweise zwei, drei oder vier Abschnitte. So werden insbesondere Stellen ausgespart, an denen das Batteriegehäuse unmittelbar auf der Stirnseite der Trennwand anliegt. Die Toleranzausgleichsmatte kann zur Befestigung beispielsweise mit der Trennwand verklebt sein. Die Toleranzausgleichsmatte umfasst beispielsweise einen Kunststoffschaum, Gummi, Silikon oder dergleichen.

Eine Batterie mit einem von einem Batteriegehäuse umschlossenen Batterieinnenraum umfasst erfindungsgemäß zumindest eine im vorigen beschriebene, im Batterieinnenraum angeordnete Trennwandbaugruppe. Aufgrund der reduzierten Teileanzahl der erfindungsgemäßen Trennwandbaugruppe gegenüber dem Vorsehen einer separaten Trennwand und einer von einem separaten Stromschienengehäuse umgebenen Stromschiene lassen sich Taktzeiten in der Fertigung der erfindungsgemäßen Batterie reduzieren und die Batterie somit besonders schnell und kostengünstig fertigen.

Eine vorteilhafte Weiterbildung der Batterie sieht vor, dass die Batterie wenigstens zwei im Batterieinnenraum angeordnete Zellmodule umfasst, wobei die Trennwandbaugruppe zwischen den beiden Zellmodulen angeordnet ist, sodass die Trennwandbaugruppe den Batterieinnenraum in zwei zueinander abgegrenzte Kammern unterteilt, insbesondere zwei hermetisch zueinander abgegrenzte Kammern, wobei die beiden Zellmodule elektrisch leitend über die Stromschiene kontaktiert sind. Die erfindungsgemäße Trennwandbaugruppe erlaubt es nicht nur die Fertigungszeit der Batterie zu verkürzen, sondern erhöht auch den Brandschutz der Batterie. So lassen sich mit der erfindungsgemäßen Trennwandbaugruppe die im Batterieinnenraum angeordneten Zellmodule gegeneinander abgrenzen, wobei potentielle Spalte im Vergleich zu bisher verwendeten Trennwänden und Stromschienengehäusen auf ein Mindestmaß reduziert oder sogar gänzlich, insbesondere fluiddicht, geschlossen werden, was das Überschlagen von Flammen und den Übertritt von heißen Gasen von einem thermisch durchgehenden Zellmodul auf ein benachbartes Zellmodul verhindert oder zumindest erschwert.

Bevorzugt weist das Batteriegehäuse für jede Kammer wenigstens ein Überdruckventil auf. Beispielsweise kann ein solches Überdruckventil von einer Berstscheibe ausgebildet sein. Kommt es zu einem thermischen Durchgehen eines Zellmoduls, so können aus dem Zellmodul austreten Gase zu einem Druckanstieg in der entsprechenden Kammer führen, in der das jeweilige Zellmodul angeordnet ist. Hierdurch entsteht die Gefahr, dass einzelne Kammern oder auch das Batteriegehäuse selbst, bersten kann. Durch das Vorsehen von Überdruckventilen lässt sich ein Druckausgleich durchführen und somit das Bersten von Kammern und/oder vom Batteriegehäuse verhindern. Mit Hilfe der erfindungsgemäßen Trennwandbaugruppe lassen sich einzelne Kammern hermetisch zueinander abgrenzen, was es erforderlich macht, für jede Kammer zumindest ein Überdruckventil vorzusehen, um jede Kammer auch vor einem unzulässigen Innendruck zu schützen. Die Trennwandanordnung und das Batteriegehäuse sind so ausgeführt, dass in einer jeweiligen Kammer ausreichend Volumen freibleibt, um aus einem Zellmodul austretende Gase gezielt in Richtung eines jeweiligen Überdruckventils zu leiten. Es können auch einzelne Kammern ohne Überdruckventil vorgesehen sein, welche dann jeweils fluidleitend zu wenigstens einer mit einem Überdruckventil versehene Kammer benachbart sind. Kommt es zu einem thermischen Durchgehen eines in einer Kammer ohne Überdruckventil angeordneten Zellmoduls, können aus dem Zellmodul austretende Gase oder Dämpfe über das Überdruckventil der benachbarten Kammer aus dem Batteriegehäuse austreten.

Erfindungsgemäß umfasst ein Fahrzeug zumindest eine um vorigen beschriebene Batterie. Bei dem Fahrzeug kann es ich um ein beliebiges Fahrzeug wie einen Pkw, Lkw, Transporter, Bus oder dergleichen handeln. Das Fahrzeug kann rein batterieelektrisch angetrieben sein oder auch als Hybridfahrzeug, insbesondere Plugin-Hybrid, ausgeführt sein. Kommt es zum Brandfall der Batterie, so haben Fahrzeuginsassen aufgrund des verbesserten Brandschutzes der erfindungsgemäßen Batterie mehr Zeit sich in Sicherheit zu bringen. Das Anstecken zueinander benachbarter Zellmodule wird zudem erschwert, wodurch mehr Zeit zur Verfügung steht, um Löschmaßnahmen einzuleiten.

Weitere vorteilhafte Ausgestaltungen der erfindungsgemäßen Trennwandbaugruppe und der erfindungsgemäßen Batterie ergeben sich auch aus den Ausführungsbeispielen, welche nachfolgend unter Bezugnahme auf Figuren näher beschrieben werden.

Dabei zeigen:
- Fig. 1: eine Explosionsdarstellung einer Batterie mit einer aus dem Stand der Technik bekannten Trennwandbaugruppe;
- Fig. 2: eine Schnittansicht durch die Batterie aus Fig. 1 in einer Einbaulage einer Stromschiene;
- Fig. 3: eine perspektivische Darstellung einer erfindungsgemäßen Trennwandbaugruppe gemäß einer ersten Ausführung;
- Fig. 4: eine Explosionsdarstellung einer erfindungsgemäßen Trennwandbaugruppe gemäß einer alternativen Ausführung; und
- Fig. 5: eine Schnittansicht durch eine Batterie mit einer erfindungsgemäßen Trennwandbaugruppe in der Einbaulage der Stromschiene.

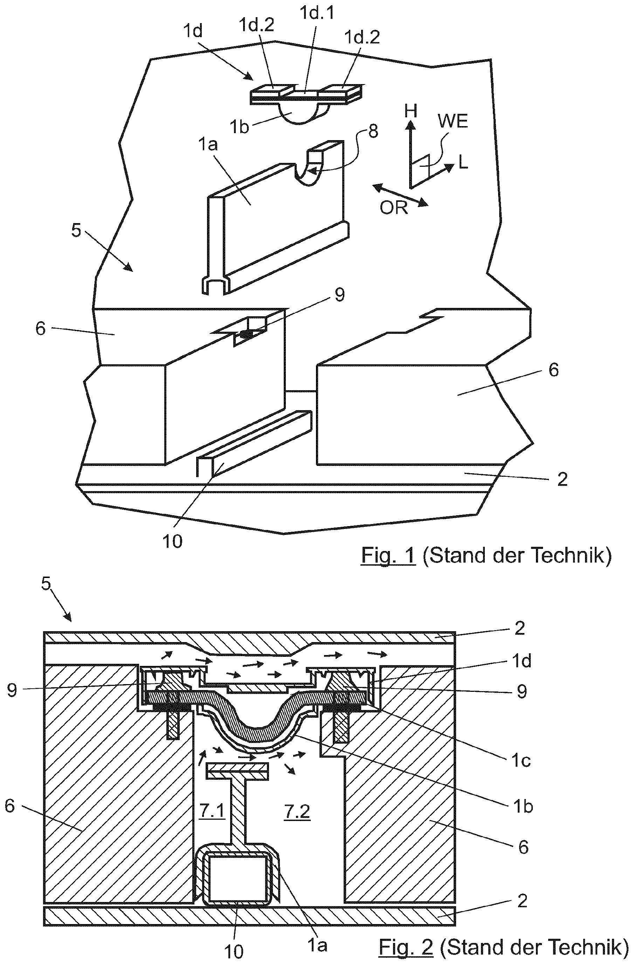

Figur 1 zeigt die Einbausituation einer aus dem Stand der Technik bekannten Trennwand 1a in einer Batterie 5, beispielsweise einer Traktionsbatterie für Fahrzeuge. Zur Übersichtlichkeit ist in Figur 1 nur das Unterteil des Batteriegehäuses 2 dargestellt. In einem vom Batteriegehäuse 2 umschlossenen Batterieinnenraum werden zumindest zwei Zellmodule 6 angeordnet, welche mittels der Trennwand 1a zueinander abgegrenzt werden. Dabei erstreckt sich die Trennwand 1a in einer durch eine Längsrichtung L und einer orthogonal auf der Längsrichtung L stehenden Höhenrichtung H aufgespannten Wandebene WE zwischen den Zellmodulen 6 und unterteilt den vom Batteriegehäuse 2 umschlossenen Batterieinnenraum in zwei in Figur 2 dargestellte Kammern 7.1 und 7.2. Dementsprechend ist jeweils zumindest ein Zellmodul 6 in einer der Kammern 7.1 und 7.2 angeordnet. Die Trennwand 1a wird beispielsweise formschlüssig mit einem vom Batteriegehäuse 2 hervorstehenden Rahmenprofil 10 verbunden.

Mit Hilfe der Trennwand 1a wird das Ausbreiten von Flammen und/oder heißen Gasen zwischen den beiden Kammern 7.1 und 7.2 erschwert. In der Trennwand 1a ist ein Durchbruch 8 eingelassen, durch den in einer orthogonalen Richtung OR durch die Wandebene WE hindurch eine Stromschiene 1c zum Kontaktieren der beiden Zellmodule 6 hindurchgeführt wird. Die Stromschiene 1c umfasst ein elektrisch leitendes Material, beispielsweise Kupfer. Die Stromschiene 1c weist Öffnungen, beispielsweise Durchgangsbohrungen, auf, durch die Schrauben 9 zum Befestigen der Stromschiene 1c an den beiden Zellmodulen 6 hindurchgeführt werden. Die Stromschiene 1c ist von einem Stromschienengehäuse 1b umgeben, um zu verhindern, dass ein unerwünschter Kontakt eines Bauelements oder auch einer Person mit der Stromschiene 1c zu einem Kurzschluss führen kann. Das Stromschienengehäuse 1b ist in die Höhenrichtung H nach oben hin mit einer Schutzkappenanordnung 1d versehen, welche einen Schutzkappenträger 1d.1 und zwei Schutzkappen 1.d2 umfasst. Die Schutzkappen 1.d2 können geöffnet werden, um das Verschrauben der Stromschiene 1c mit den Zellmodulen 6 zu ermöglichen.

Die Montage der Batterie ist aufgrund der vergleichsweise hohen Anzahl zu verbauender Teile aufwändig. Ferner ist es möglich, dass im Brandfall zumindest eines Zellmoduls 6 Flammen und/oder aus dem Zellmodul 6 austretende heiße Gase über den Durchbruch 8 durch die Trennwand 1a und somit beispielsweise von der ersten Kammer 7.1 in die zweite Kammer 7.2 überschlagen bzw. übertreten. Dies erhöht das Risiko, dass sich das benachbarte Zellmodul 6 ebenfalls entzündet oder zumindest beschädigt wird.

Figur 2 zeigt noch einmal die in Figur 1 dargestellte Einbausituation der Trennwand 1a und der Stromschien 1c mitsamt dem Stromschienengehäuse 1d in einer Schnittansicht durch die Einbaulage der Stromschiene 1c in die Längsrichtung L. In Figur 2 sind mehrere Pfeile eingezeichnet, welche das Durchtreten von Gas und/oder Flammen aus der ersten Kammer 7.1 in die zweite Kammer 7.2 über die zwischen der Trennwand 1a und dem Stromschienengehäuse 1b liegende Öffnung symbolisieren.

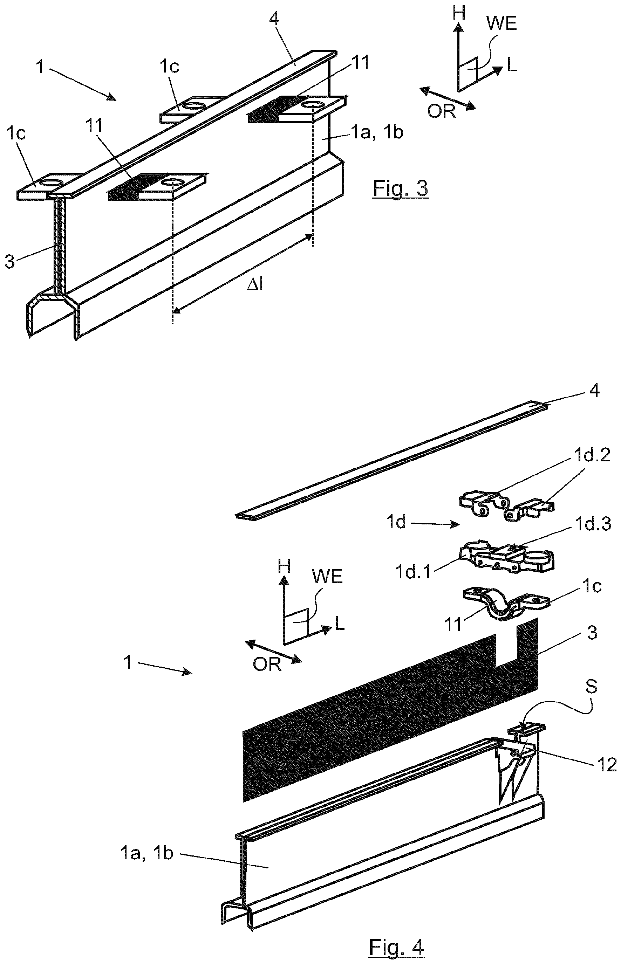

Figur 3 zeigt eine perspektivische Darstellung einer erfindungsgemäßen Trennwandbaugruppe 1. Hier sind erfindungsgemäß die Trennwand 1a und das Stromschienengehäuse 1b einteilig ausgeführt. Hierdurch ist es möglich, die Anzahl der in der Fertigung der Batterie 5 zu verbauenden Teile zu reduzieren. Hierdurch lassen sich Taktzeiten in der Fertigung verkürzen, was zu Kosteneinsparungen führt.

Ein weiterer positiver Nebeneffekt der erfindungsgemäßen Trennwandbaugruppe 1 ermöglicht es die offene Fläche des Durchbruchs 8 auf ein Mindestmaß zu reduzieren bzw. sonstige Spalte zwischen Trennwand 1a und Batteriegehäuse 2 zu schließen. In einer besonders bevorzugten Ausführung ist es mit einer erfindungsgemäßen Trennwandbaugruppe 1 möglich, die beiden Kammern 7.1 und 7.2 hermetisch zueinander abzugrenzen, wodurch ein besonders hoher Widerstand zum Durchschlagen von Flammen bzw. Durchtritt von Gasen aus der ersten Kammer 7.1 in die zweite Kammer 7.2 erreicht wird.

Die erfindungsgemäße Trennwandbaugruppe 1 kann eine oder auch mehrere Stromschienen 1c aufweisen. Die Trennwand 1a bildet somit das Stromschienengehäuse 1b für eine oder mehrere Stromschienen 1c aus. Beispielsweise umfasst die Trennwandbaugruppe 1, wie in Figur 3 dargestellt, zwei Stromschienen 1c. Diese sind in die Längsrichtung L mit einem Abstand ΔI zueinander beabstandet. Die Trennwand 1a weist entsprechend zwei Öffnungen zur Aufnahme und zum Hindurchführen von brettförmigen oder bandförmigen Stromschienen 1c in die orthogonale Richtung OR auf. Die Stromschienen 1c können dabei mittelbar oder unmittelbar an der Trennwand 1a anliegen. Beispielsweise können die Stromschienen 1c zumindest abschnittsweise von einem Schrumpfschlauch 11 umhüllt sein. Mit Hilfe des Schrumpfschlauchs 11 lässt sich ein möglicher Spalt zwischen Trennwand 1a und Stromschiene 1c fluiddicht schließen. Ferner kann eine Toleranzausgleichsmatte 4 in der Höhenrichtung H betrachtet auf der Trennwand 1a angeordnet sein, worauf später noch eingegangen wird.

Figur 4 zeigt eine vorteilhafte Ausgestaltung der erfindungsgemäßen Trennwandbaugruppe 1, welche die Aufnahme auch von gebogenen Stromschienen 1c ermöglicht, wie sie in den Figuren 1, 2, 4 und 5 gezeigt sind. Eine solche Stromschiene 1c weist ein im Wesentlichen U-förmiges Profil mit zwei in einer Ebene liegenden Fortsätzen zum Kontaktieren der Stromschiene 1c mit den Zellmodulen 6 auf. Mit Hilfe dieser Biegung können beispielsweise Relativbewegungen zwischen den Zellmodulen 6 sowie thermische Dehnung ausgeglichen werden. Bei der in Figur 4 gezeigten Ausführungsform der Trennwandbaugruppe 1 wird die Stromschiene 1c zur Aufnahme durch die Trennwand 1a in die Höhenrichtung H betrachtet in den in die Trennwand 1a eingelassenen Aufnahmeraum 12 eingeführt und dieser mit der Schutzkappenanordnung 1d verschlossen. Auch hier umfasst die Schutzkappenanordnung 1d den Schutzkappenträger 1d.1 und zwei Schutzkappen 1d.2. Die Stromschiene 1c liegt hier bevorzugt fluiddicht mittelbar über den Schrumpfschlauch 11 an der Trennwand 1a und der Schutzkappenanordnung 1d in der Wandebene WE an.

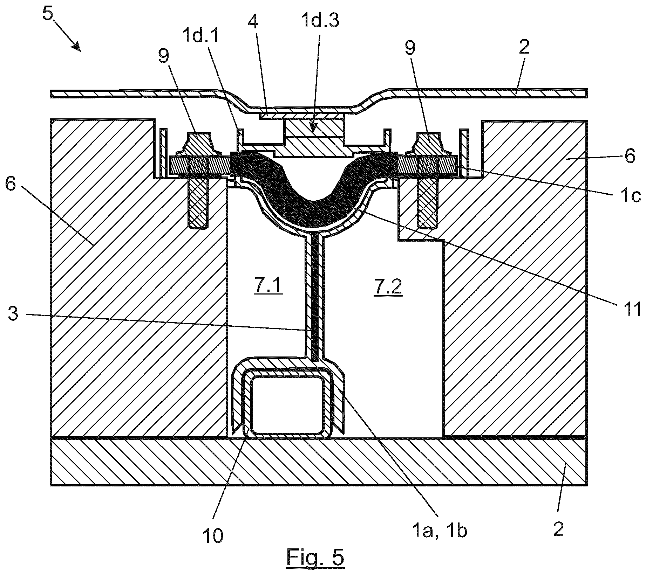

Zum Ausgleich einer Distanz zwischen dem in die Höhenrichtung H betrachtet oberen Ende bzw. Seite der Schutzkappenordnung 1d und einer Stirnseite S der Trennwand 1a, weist die Schutzkappenanordnung 1d erfindungsgemäß ein Distanzstück 1d.3 auf. Das Distanzstück 1d.3 füllt den noch verbleibenden Hohlraum zwischen Schutzkappenträger 1d.1 und dem Batteriegehäuse 2 aus, was noch einmal aus Figur 5 ersichtlich wird. Insbesondere weist das Distanzstück 1d.3 in die Höhenrichtung H eine solche Ausdehnung auf, dass das Distanzstück 1d.3 in die Höhenrichtung H betrachtet bündig mit der Stirnseite S der Trennwand 1a abschließt.

Besonders bevorzugt ist auf der Stirnseite S der Trennwand 1a in die Längsrichtung L über die vollständige Länge der Trennwand 1a eine Toleranzausgleichsmatte 4 angeordnet. Die Toleranzausgleichsmatte 4 umfasst beispielsweise einen Kunststoffschaum, Gummi, Silikon oder dergleichen und begünstigt das hermetische Abgrenzen der beiden Kammern 7.1 und 7.2 zueinander. Es lassen sich mit der Toleranzausgleichsmatte 4 etwaige Spalte zwischen dem Batteriegehäuse 2 und der Trennwand 1a bzw. dem Distanzstück 1d.3 schließen.

Die Trennwand 1a weist in die orthogonale Richtung OR betrachtet eine Sandwichbauweise auf, wobei in einen Hohlraum der Trennwand 1a ein Sandwichkern 3 eingelegt ist. Der Sandwichkern 3 umfasst ein mineralisches Material oder besteht vollständig aus diesem. Ein mineralisches Material hat den Vorteil, dass es Strom nicht leitet und zudem ein Wärmewiderstand durch die Trennwand 1a in die orthogonale Richtung OR erhöht. Hierdurch lässt sich das Risiko eines thermisch bedingten Bauteilschadens für zwei benachbarte Zellmodule 6 beim thermischen Durchgehen eines der Zellmodule 6 reduzieren. Bevorzugt umfasst auch die Trennwand 1a sowie die Schutzkappenanordnung 1d ein elektrisch nicht leitfähiges Material, beispielsweise Kunststoff. Als Kunststoff kommt beispielsweise PA6, GF35 oder ein beliebiges Duroplast oder auch ein sogenanntes Sheet-Molding-Compound, also ein Faser-Kunststoff-Verbund-Material, in Frage. Die Trennwand 1a sowie die Schutzkappenanordnung 1d können bevorzugt mittels Spritzgießen hergestellt sein, was eine besonders kostengünstige und schnelle Fertigung der entsprechenden Bauteile erlaubt.

Zur Befestigung der Schutzkappenanordnung 1d auf der Trennwand 1a kann die Schutzkappenanordnung 1d beispielsweise auf der Trennwand 1a aufgeclipst werden.

Figur 5 zeigt noch einmal die in Figur 4 dargestellte Ausführung der erfindungsgemäßen Trennwandbaugruppe 1 in einem Schnitt in die Längsrichtung L auf Höhe der Einbaulage der Stromschiene 1c. Ein Vergleich von Figur 5 und Figur 2 zeigt, dass freie Öffnungen bzw. Spalte zwischen Trennwand 1a und Batteriegehäuse 2 sowie zwischen Stromschiene 1c und Trennwand 1a bzw. Schutzkappenanordnung 1d geschlossen wurden, sodass sich etwaige Flammen und/oder Gase nicht über die Kammern 7.1 und 7.2 hinweg ausbreiten können. In Figur 5 sind die Schutzkappen 1d.2 nicht dargestellt.

Um im Falle des thermischen Durchgehens eines Zellmoduls 6 ein Bersten einer der Kammern 7.1, 7.2 zu verhindern, kann das Batteriegehäuse 2 bevorzugt für jede Kammer 7.1, 7.2 zumindest ein Überdruckventil (nicht dargestellt) aufweisen. Bei einem solchen Überdruckventil kann es sich beispielsweise um eine Berstscheibe handeln.

## Patentansprüche

1. Trennwandbaugruppe (1) für ein Batteriegehäuse (2),
mit einer Trennwand (1a), die in einer von einer Längsrichtung (L) und einer orthogonal auf der Längsrichtung (L) stehenden Höhenrichtung (H) aufgespannten Wandebene (WE) liegt und dazu eingerichtet ist einen vom Batteriegehäuse (2) umschlossenen Batterieinnenraum in zueinander abgegrenzte Kammern (7.1, 7.2) zu unterteilen,
mit wenigstens einem Stromschienengehäuse (1b) und
mit wenigstens einer im Stromschienengehäuse (1b) aufgenommenen Stromschiene (1c), welche orthogonal zur Wandebene (WE) durch die Trennwand (1a) hindurchgeführt ist, wobei
das Stromschienengehäuse (1b) einteilig mit der Trennwand (1a) ausgeführt ist **dadurch gekennzeichnet, dass**
die Trennwand (1a) separat gegenüber dem Batteriegehäuse (2) ausgeführt ist und dazu eingerichtet ist mit diesem verbunden zu werden; und
die Trennwand (1a) einen Sandwichaufbau in eine zur Wandebene (WE) orthogonale Richtung (OR) aufweist, wobei ein Sandwichkern (3) ein mineralisches Material umfasst oder vollständig hieraus besteht.

2. Trennwandbaugruppe (1) nach Anspruch 1,
**dadurch gekennzeichnet, dass**
die Stromschiene (1c) in der Wandebene (WE) zumindest mittelbar formschlüssig an der Trennwand (1a) anliegt, insbesondere fluiddicht anliegt.

3. Trennwandbaugruppe (1) nach Anspruch 1 oder 2,
**gekennzeichnet durch**
eine Schutzkappenanordnung (1d) für jede Stromschiene (1c), wobei die Schutzkappenanordnung (1d) zusammen mit der Trennwand (1a) eine jeweilige Stromschiene (1c) einschließt und mit einem in der Wandebene (WE) liegendem und in der Höhenrichtung (H) auf der Schutzkappenanordnung (1d) angeordneten Distanzstück (1d.3), wobei das Distanzstück (1d.3) und eine in der Höhenrichtung (H) liegende Stirnseite (S) der Trennwand (1a) in die Höhenrichtung (H) bündig aneinander anliegen.

4. Trennwandbaugruppe (1) nach einem der Ansprüche 1 bis 3,
**dadurch gekennzeichnet, dass**
die Trennwand (1a) zumindest ein nichtleitendes Material umfasst, insbesondere Kunststoff und/oder ein Faser-Kunststoff-Verbund-Material und die Trennwand (1a) bevorzugt durch Spritzgießen hergestellt ist.

5. Trennwandbaugruppe (1) nach einem der Ansprüche 1 bis 4,
**dadurch gekennzeichnet, dass**
auf einer in der Höhenrichtung (H) liegenden Stirnseite (S) der Trennwand (1a) eine in die Längsrichtung (L) insbesondere über die vollständige Länge der Trennwand (1a) durchgehende Toleranzausgleichsmatte (4) angeordnet ist, wobei die Toleranzausgleichsmatte (4) in die Höhenrichtung (H) betrachtet über der Stromschiene (1c) verläuft.

6. Batterie (5) mit einem von einem Batteriegehäuse (2) umschlossenen Batterieinnenraum,
**gekennzeichnet durch**
eine im Batterieinnenraum angeordnete Trennwandbaugruppe (1) nach einem der Ansprüche 1 bis 5.

7. Batterie (5) nach Anspruch 6,
**gekennzeichnet durch**
wenigstens zwei im Batterieinnenraum angeordnete Zellmodule (6), wobei die Trennwandbaugruppe (1) zwischen den beiden Zellmodulen (6) angeordnet ist, sodass die Trennwandbaugruppe (1) den Batterieinnenraum in zwei zueinander abgegrenzte Kammern (7.1, 7.2) unterteilt, insbesondere zwei hermetisch zueinander abgegrenzte Kammern (7.1, 7.2), wobei die beiden Zellmodule (6) elektrisch leitend über die Stromschiene (1c) kontaktiert sind.

8. Batterie (5) nach Anspruch 7,
**dadurch gekennzeichnet, dass**
das Batteriegehäuse (2) für jede Kammer (7.1, 7.2) wenigstens ein Überdruckventil aufweist.

9. Fahrzeug,
**gekennzeichnet durch**
wenigstens eine Batterie (5) nach einem der Ansprüche 6 bis 8.

## Claims

1. Partition wall assembly (1) for a battery housing (2),
the partition wall assembly comprising a partition wall (1a), which is in a wall plane (WE) defined by a longitudinal direction (L) and a vertical direction (H) orthogonal to the longitudinal direction (L) and is designed to divide a battery interior enclosed by the battery housing (2) into chambers (7.1, 7.2) delimited from one another,
comprising at least one busbar housing (1b) and
comprising at least one busbar (1c) accommodated in the busbar housing (1b), which busbar is guided orthogonally to the wall plane (WE) through the partition wall (1a),
the busbar housing (1b) being designed in one piece with the partition wall (1a), **characterized in that**
the partition wall (1a) is designed separately from the battery housing (2) and is designed to be connected thereto; and
the partition wall (1a) has a sandwich structure in an orthogonal direction (OR) to the wall plane (WE), a sandwich core (3) comprising a mineral material or consisting entirely thereof.

2. Partition wall assembly (1) according to claim 1,
**characterized in that**
the busbar (1c) in the wall plane (WE) lies at least indirectly interlockingly, in particularly fluid-tightly, against the partition wall (1a).

3. Partition wall assembly (1) according to either claim 1 or 2,
**characterized by**
a protective cap arrangement (1d) for each busbar (1c), the protective cap arrangement (1d) together with the partition wall (1a) enclosing a relevant busbar (1c) and having a spacer (1d.3) which is located in the wall plane (WE) and arranged in the vertical direction (H) on the protective cap arrangement (1d), the spacer (1d.3) and an end face (S) of the partition wall (1a) in the vertical direction (H) lying flush against one another in the vertical direction (H).

4. Partition wall assembly (1) according to any of claims 1 to 3,
**characterized in that**
the partition wall (1a) comprises at least one non-conductive material, in particular plastics material and/or a fiber-plastics composite material and the partition wall (1a) is preferably produced by injection molding.

5. Partition wall assembly (1) according to any of claims 1 to 4,
**characterized in that**
on an end face (S) of the partition wall (1a) in the vertical direction (H), a tolerance compensation mat (4) is arranged which extends in the longitudinal direction (L), in particular over the entire length of the partition wall (1a), the tolerance compensation mat (4) extending over the busbar (1c) when viewed in the vertical direction (H).

6. Battery (5) having a battery interior enclosed by a battery housing (2),
**characterized by**
a partition wall assembly (1) according to any of claims 1 to 5 arranged in the battery interior.

7. Battery (5) according to claim 6,
**characterized by**
at least two cell modules (6) arranged in the battery interior, the partition wall assembly (1) being arranged between the two cell modules (6), such that the partition wall assembly (1) divides the battery interior into two chambers (7.1, 7.2) delimited from one another, in particular two chambers (7.1, 7.2) delimited hermetically from one another, the two cell modules (6) being electrically conductively contacted via the busbar (1c).

8. Battery (5) according to claim 7,
**characterized in that**
the battery housing (2) has at least one pressure relief valve for each chamber (7.1, 7.2).

9. Vehicle,
**characterized by**
at least one battery (5) according to any of claims 6 to 8.

## Revendications

1. Ensemble paroi de séparation (1) pour un boîtier de batterie (2),
comportant une paroi de séparation (1a) qui est située dans un plan de paroi (WE) défini par une direction longitudinale (L) et une direction de hauteur (H) orthogonale à la direction longitudinale (L) et qui est conçue pour diviser un espace intérieur de batterie entouré par le boîtier de batterie (2) en chambres (7.1, 7.2) délimitées l'une par rapport à l'autre,
comportant au moins un boîtier de barre omnibus (1b) et
comportant au moins une barre omnibus (1c) reçue dans le boîtier de barre omnibus (1b), laquelle est passée à travers la paroi de séparation (1a) orthogonalement au plan de paroi (WE), dans lequel
le boîtier de barre omnibus (1b) est réalisé d'une seule pièce avec la paroi de séparation (1a), **caractérisé en ce que**
la paroi de séparation (1a) est réalisée séparément du boîtier de batterie (2) et est conçue pour être reliée à celui-ci ; et
la paroi de séparation (1a) présente une structure en sandwich dans une direction (OR) orthogonale au plan de paroi (WE), dans lequel un noyau de sandwich (3) comprend un matériau minéral ou est entièrement constitué de celui-ci.

2. Ensemble paroi de séparation (1) selon la revendication 1,
**caractérisé en ce que**
la barre omnibus (1c) repose, en particulier de manière étanche aux fluides, au moins indirectement par complémentarité de forme contre la paroi de séparation (1a) dans le plan de paroi (WE).

3. Ensemble paroi de séparation (1) selon la revendication 1 ou 2,
**caractérisé par**
un agencement formant capuchon de protection (1d) pour chaque barre omnibus (1c), dans lequel l'agencement formant capuchon de protection (1d) enferme conjointement avec la paroi de séparation (1a) une barre omnibus (1c) respective et comportant une pièce d'écartement (1d.3) située dans le plan de paroi (WE) et disposée dans la direction de hauteur (H) sur l'agencement formant capuchon de protection (1d), dans lequel la pièce d'écartement (1d.3) et une face frontale (S) de la paroi de séparation (1a) située dans la direction de hauteur (H) reposent l'une contre l'autre en affleurement dans la direction de hauteur (H).

4. Ensemble paroi de séparation (1) selon l'une des revendications 1 à 3,
**caractérisé en ce que**
la paroi de séparation (1a) comprend au moins un matériau non conducteur, en particulier une matière plastique et/ou un matériau composite fibre-matière plastique, et la paroi de séparation (1a) est fabriquée de préférence par moulage par injection.

5. Ensemble paroi de séparation (1) selon l'une des revendications 1 à 4,
**caractérisé en ce que**
sur une face frontale (S) de la paroi de séparation (1a) située dans la direction de hauteur (H) est disposé un tapis de compensation de tolérance (4) continu dans la direction longitudinale (L), en particulier sur toute la longueur de la paroi de séparation (1a), dans lequel le tapis de compensation de tolérance (4), vu dans la direction de hauteur (H), s'étend au-dessus de la barre omnibus (1c).

6. Batterie (5) comportant un espace intérieur de batterie entouré par un boîtier de batterie (2),
**caractérisée par**
un ensemble paroi de séparation (1) selon l'une des revendications 1 à 5 disposé dans l'espace intérieur de batterie.

7. Batterie (5) selon la revendication 6,
**caractérisée par**
au moins deux modules cellulaires (6) disposés dans l'espace intérieur de batterie, dans laquelle l'ensemble paroi de séparation (1) est disposé entre les deux modules cellulaires (6), de sorte que l'ensemble paroi de séparation (1) divise l'espace intérieur de batterie en deux chambres (7.1, 7.2) délimitées l'une par rapport à l'autre, en particulier deux chambres (7.1, 7.2) délimitées hermétiquement l'une par rapport à l'autre, dans laquelle les deux modules cellulaires (6) sont en contact de manière électriquement conductrice par l'intermédiaire de la barre omnibus (1c).

8. Batterie (5) selon la revendication 7,
**caractérisée en ce que**
le boîtier de batterie (2) présente pour chaque chambre (7.1, 7.2) au moins une soupape de surpression.

9. Véhicule,
**caractérisé par**
au moins une batterie (5) selon l'une des revendications 6 à 8.
